# EUROPEAN PATENT APPLICATION

(11) **EP 4 389 323 A1**
(43) Date of publication of application: **26.06.2024**
(21) Application number: 22214871.0
(22) Date of filing: 20.12.2022
(51) Int. Cl.: B22F 10/28, B22F 10/47, B22F 10/66, B33Y 10/00, B33Y 40/20

(54) **METHOD FOR POST-TREATING ADDITIVELY MANUFACTURED STRUCTURES BY MEANS OF ULTRASOUND**

(71) Applicant: Fraunhofer-Gesellschaft zur Förderung der angewandten Forschung e.V., 80686 München (DE); Albert-Ludwigs-Universität Freiburg, 79098 Freiburg (DE)
(72) Inventor: PFAFF, Aron, 79104 Freiburg (DE); BALLE, Frank, 79104 Freiburg (DE)
(74) Representative: Maiwald GmbH

(57) **Abstract**

The present invention relates to a method for removing metal based support structures from an additively manufactured metal based structure by means of ultrasound waves, a device for removing metal based support structures from an additively manufactured metal based structure and the use of said device for removing metal based support structures from an additively manufactured metal based structure by means of ultrasound waves.

## Description

The present invention relates to a method for removing metal based support structures from an additively manufactured metal based structure by means of ultrasound waves, a device for removing metal based support structures from an additively manufactured metal based structure and the use of said device for removing metal based support structures from an additively manufactured metal based structure by means of ultrasound waves.

### Technical background

The additive manufacturing of a component is accompanied by a multitude of preparation and post-processing measures. The actual 3D printing thus represents a single step in an entire process chain. Metallic components in particular are subjected to extensive post-treatment after additive manufacturing. This includes the removal of powder residues, heat treatments, removal of process-related support structures and surface treatments to reduce surface roughness. The last two steps in particular are considered to be the greatest challenge in terms of broader industrial use and small series production.

Some additive manufacturing processes such as metallic Laser Powder Bed Fusion (L-PBF) and Electron Beam Powder Bed Fusion (E-PBF) require so-called support structures in order to manufacture a component. The support structures are often designed to be filigree in order to keep production time and material consumption low. Due to manufacturing reasons the support structures and the component consist most of the time of the same alloy. They are designed to be massive enough to be able to dissipate thermal loads quickly and to be able to counteract stress gradients resulting from residual cooling stresses. This ensures a high component quality. At the same time, a filigree design with predetermined breaking points allows the support structures to be separated from the actual piece. Due to the complex shaped surfaces and individual nature of additively manufactured three-dimensional pieces, a mechanical automated removal is associated with a very high effort. Therefore, the removal of support structures is currently done manually, i.e. by hand with conventional tools such as hammers, chisels or pliers. This is associated with high personnel costs and corresponding skill or sufficient experience (depending on the piece, approx. 2-240 min/piece; for typical pieces approx. 20 min).

A further technical problem is that the connection area between the support structure and the component usually has an insufficient surface quality. This primarily relates to the fact that the components in these areas can exhibit increased roughness, but also increased near-surface defects in the form of (micro-) cracks and pores.

Currently, support structures are primarily removed manually with the disadvantages described above.

Furthermore, electrochemical processes were developed in which the entire piece with support structure is treated in an immersion tank (e.g. WO 2019/166166 A1). The treatment is carried out until the predetermined breaking point of the support structure is "etched through". The process is well suited for the automation of larger quantities. However, there are also a number of disadvantages and limitations:
1. Not only the support structure but also the piece itself is etched. This results in unwanted edge rounding so that filigree areas cannot be constituted. Furthermore, it is necessary to digitally adjust each piece individually to compensate for the material removed and to ensure sufficient dimensional accuracy. This process can require several manufacturing iterations. For smaller quantities, this results in a higher effort than with conventional support removal by hand.
2. Only selected materials are suitable for the process due to their chemical composition.
3. There is more hazardous waste and increased requirements for occupational safety and disposal.
4. Additional process steps are needed, which results in additional costs due to therefor required plant technology and increased process time.

Due to the points listed above, the electrochemical processes are only suitable for the production of larger quantities of pieces of the same geometry. Typically, however, the quantities in additive manufacturing are very low for individual geometries.

Thus, there is still a need for improved rapid mechanical support structure removal.

### Summary of the invention

In a first aspect the present invention relates to a method for post-treating an additively manufactured structure comprising the following steps:
- Preparing a metal based three-dimensional structure including one or more metal based support structure(s) by additive manufacturing;
- Removing the one or more metal based support structure(s) from the metal based three-dimensional structure by means of ultrasound waves.

In a second aspect the present invention relates to a device for removing one or more metal based support structure(s) from a metal based three-dimensional structure prepared by additive manufacturing comprising
- a generator for generating ultrasound waves;
- a manipulator for manipulating the frequency of the ultrasound waves to at least 20 kHz, preferably in a range of from 20 to 40 kHz and/or the amplitude of the ultrasound waves to from 1 to 50 µm, preferably in the range of from 10 to 30 µm; and
- a sonotrode, preferably a handheld sonotrode, having a width of from 0.5 to 30 mm, preferably from 0.5 to 20 mm, still more preferably from 1 to 15 mm, most preferably from 1 to 10 mm.

In a third aspect the present invention relates to the use of the device as described above or below for removing one or more metal based support structure(s) from a metal based three-dimensional structure prepared by additive manufacturing by means of ultrasound waves.

### Brief description of the figure

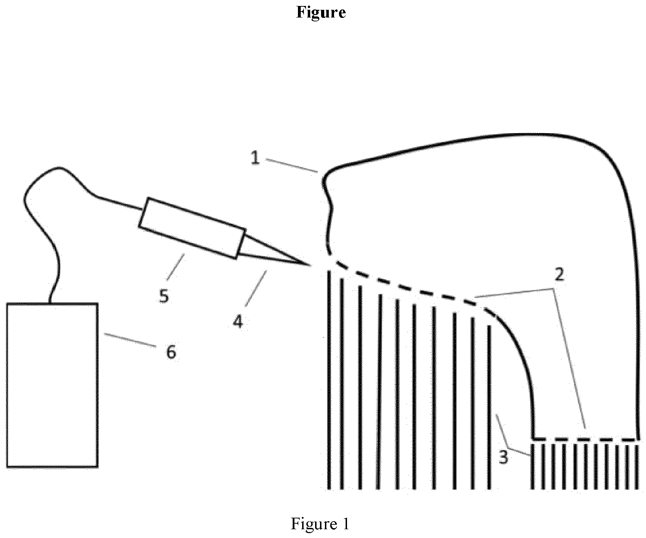

Figure 1 shows a schematic illustration of the inventive method and the inventive device with the following reference numbers
- 1: additively manufactured metal based three-dimensional structure
- 2: contact areas of the metal based support structures and the surface of the metal based three-dimensional structure
- 3: metal based support structures
- 4: sonotrode
- 5: ultrasound manipulator
- 6: ultrasound generator

### Detailed description

In a first aspect the present invention relates to a method for post-treating an additively manufactured structure comprising the following steps:
- Preparing a metal based three-dimensional structure including one or more metal based support structure(s) by additive manufacturing;
- Removing the one or more metal based support structure(s) from the metal based three-dimensional structure by means of ultrasound waves.

"Metal based" in the sense of the present invention means that the structure, i.e. the metal based three-dimensional structure and/or the one or more metal based support structure(s), comprise metal or metal containing alloys in a weight majority, i.e. in an amount of more than 50 wt.-%, preferably in an amount of from 55 to 100 wt.-%, still more preferably in an amount of from 85 to 100 wt.-%, based on the total weight amount of the structure. In a preferred embodiment the structure, i.e. the metal based three-dimensional structure and/or the one or more metal based support structure(s), consists of metal or metal containing alloys, i.e. in an amount of 100 wt.-%, based on the total weight amount of the structure.

The metal based three-dimensional structure is prepared by additive manufacturing.

The metal based three-dimensional structure can be prepared by additive manufacturing process suitable for metal based three-dimensional structures.

Preferred additive manufacturing processes are laser powder bed fusion (L-PBF) and electron beam powder bed fusion (E-PBF).

The principles and conditions of additive manufacturing processes for preparing metal based three-dimensional structures are well known in the art.

The metal based three-dimensional structure comprises one or more metal based support structure(s). As discussed above in the background art section the one or more metal based support structure(s) are a requirement for preparing three-dimensional structures in additive manufacturing processes and are designed to be filigree in order to keep production time and material consumption low and at the same time to be massive enough to be able to dissipate thermal loads quickly and to be able to counteract stress gradients resulting from residual cooling stresses.

The one or more metal based support structure(s) can be one support structure or a plurality of independent support structures depending on the design of the metal based three-dimensional structure.

In one embodiment the one or more metal based support structure(s) is a lattice-like structure.

The one or more metal based support structure(s) are connected to the surface of the metal based three-dimensional structure by means of one or more, preferably a plurality of contact area(s).

The contact areas are preferably designed as such that they have a length of from 0.01 to 10 mm, preferably 0.1 to 5 mm.

The contact areas can have any suitable shape and depend on the design of the metal based three-dimensional structure. The above mentioned length of the contact area thereby means the length from the two points of the contact area which are farthest away from each other, i.e. the maximum length of the contact area.

The one or more support structure(s) include one or more predetermined breaking point(s). The one or more predetermined breaking point(s) are preferably arranged as such that upon removal from the metal based three-dimensional structure fragments having a length of from 1 to 15 mm are obtained.

The one or more predetermined breaking point(s) are preferably situated in close proximity to the contact areas in order to avoid extensive bumps and imperfections on the surface of the metal based three-dimensional structure, which need to be removed in a further processing step.

Additionally, depending on the design of the one or more support structure(s) additional predetermined breaking point(s) can be arranged in the one or more support structure(s) e.g. for breaking up complex three-dimensional structures within the support structure(s) or breaking the support structures in smaller fractions e.g. for easier removal from the metal based three-dimensional structure.

The raw material of the metal based three-dimensional structure and the one or more metal based support structure(s) are individually selected from steel, aluminium alloys, titanium alloys, nickel base alloys, cobalt chromium alloys, other metallic materials such as high density materials having a density of more than 10 g/cm³ and combinations thereof.

The metal based three-dimensional structure and the one or more metal based support structure(s) can be prepared from the same raw material or from different raw materials.

In the method of the present invention the one or more metal based support structure(s) are removed from the metal based three-dimensional structure by means of ultrasound waves.

The ultrasound waves preferably have a frequency of at least 20 kHz, preferably from 20 to 40 kHz.

Further, the ultrasound waves preferably have an amplitude of from 1 to 50 µm, preferably from 10 to 30 µm.

The ultrasound waves, when directed towards a predetermined breaking point of the one or more metal based support structure(s) preferably induces resonant excitation within the one or more metal based support structure(s) which results in breaking the support structure at a predetermined breaking point.

The ultrasound waves are directed towards the one or more metal based support structure(s) by means of a sonotrode.

It is preferred that the sonotrode is a handheld sonotrode.

The geometry of the sonotrode generally depends on the frequency and amplitude of the ultrasound waves as well as on the geometry of the contact area between the metal based three-dimensional structure and the one or more metal based support structure(s).

The geometry of the sonotrode is preferably designed as such that it can be brought into close proximity (e.g. within a range of 0 to 25 mm, preferably 0 to 10 mm) of a predetermined breaking point of the one or more metal based support structure(s).

Further, the geometry of the sonotrode is preferably designed as such that the ultrasound waves can be directed directly towards a predetermined breaking point of the one or more metal based support structure(s), i.e. without barrier.

The sonotrode preferably has a width of from 0.5 to 30 mm, preferably from 0.5 to 20 mm, still more preferably from 1 to 15 mm, most preferably from 1 to 10 mm.

The sonotrode can have any geometry suitable for being brought into close proximity of a predetermined breaking point of the one or more metal based support structure(s).

The above mentioned width of the sonotrode thereby means the length from the two points of the sonotrode which are farthest away from each other, i.e. the maximum width of the sontrode.

The sonotrode preferably has a generally circular or generally rectangular geometry having a diameter (circular) or edge length (rectangular) of from 0.5 to 20 mm, preferably from 1 to 15 mm.

For removing the one or more metal based support structure(s) from the metal based three-dimensional structure one single sonotrode can be used.

Depending on the design of the contact areas also a plurality of sonotrodes of different geometries, such as two to ten, preferably two or three sonotrodes of different geometries, can be used.

The method of the invention can comprise the further step of
- Removing bumps and imperfections from the surface of the metal based three-dimensional structure by means of ultrasound waves.

The additional step can be conducted during the step of removing the one or more metal based support structure(s) from the metal based three-dimensional structure by means of ultrasound waves in a combined step.

Alternatively, the additional step can be conducted as a distinct surface polishing step after the step of removing the one or more metal based support structure(s) from the metal based three-dimensional structure by means of ultrasound waves.

The general conditions and principles as outlined above or below for the step of removing the one or more metal based support structure(s) from the metal based three-dimensional structure by means of ultrasound waves thereby also apply for the step of removing bumps and imperfections from the surface of the metal based three-dimensional structure by means of ultrasound waves.

In a second aspect the present invention relates to a device for removing one or more metal based support structure(s) from a metal based three-dimensional structure prepared by additive manufacturing comprising
- a generator for generating ultrasound waves;
- a manipulator for manipulating the frequency of the ultrasound waves to at least 20 kHz, preferably in a range of from 20 to 40 kHz and/or the amplitude of the ultrasound waves to from 1 to 50 µm, preferably in the range of from 10 to 30 µm; and
- a sonotrode, preferably a handheld sonotrode, having a width of from 0.5 to 30 mm, preferably from 0.5 to 20 mm, still more preferably from 1 to 15 mm, most preferably from 1 to 10 mm.

The device preferably is a portable device.

The sonotrode is preferably removably attached to the device.

It is preferred that the device includes a plurality of sonotrodes with different geometries, such as two to ten, preferably two or three sonotrodes with different geometries, which can be removably attached to the device.

The device according to the present invention is preferably designed for conducting the method according to the invention in all aspects and embodiments as described above or below.

In a third aspect the present invention relates to the use of the device as described above or below for removing one or more metal based support structure(s) from a metal based three-dimensional structure prepared by additive manufacturing by means of ultrasound waves.

It is thereby preferred that the device as described above or below is additionally used for removing bumps and imperfections from the surface of the metal based three-dimensional structure by means of ultrasound waves.

Thereby, preferably all aspects and embodiments of the inventive method and device as described above or below apply for the use of the present invention.

### Description of the Figure

Figure 1 shows a schematic illustration of the inventive method and the inventive device.

Thereby, a three-dimensional structure (1) is illustrated with support structures (3), which a connected to the support structures (3) by means of contact areas (2).

The three-dimensional structure (1) and the support structures (3) are prepared from a metal based raw material preferably selected from steel, aluminium alloys, titanium alloys, nickel base alloys, cobalt chromium alloys, other metallic materials such as high density materials having a density of more than 10 g/cm³ and combinations thereof.

The contact areas preferably have a length of from 0.01 to 10 mm, preferably 0.1 to 5 mm. The support structures (3) include predetermined breaking points preferably in close proximity to the accordant contact area (2).

The three-dimensional structure (1) and the support structures (3) are prepared by an additive manufacturing process such as laser powder bed fusion (L-PBF) and electron beam powder bed fusion (E-PBF).

Further illustrated is a device for removing the metal based support structures from a metal based three-dimensional structure including a generator (6) for generating ultrasound waves, a manipulator (5) for manipulating the frequency of the ultrasound waves to at least 20 kHz, preferably in a range of from 20 to 40 kHz and/or the amplitude of the ultrasound waves to from 1 to 50 preferably from 10 to 30 µm and a sonotrode (4) having a width of from 0.5 to 30 mm, preferably from 0.5 to 20 mm, still more preferably from 1 to 15 mm, most preferably from 1 to 10 mm. In one embodiment the sonotrode can have a generally circular or generally rectangular geometry with a diameter (circular) or edge length (rectangular) of from 0.5 to 20 mm, preferably from 1 to 15 mm.

The device preferably is a portable device.

The sonotrode (4) preferably is a handheld sonotrode.

The geometry of the sonotrode is preferably adapted to the design of the contact areas as such that that it can be brought into close proximity (e.g. within a range of 0 to 25 mm, preferably 0 to 10 mm) of a predetermined breaking point of a support structure (3).

Further, the geometry of the sonotrode is preferably adapted as such that the ultrasound waves can be directed directly towards a predetermined breaking point of the support structure (3), i.e. without barrier.

The device can include a plurality of sonotrodes with different geometries, such as two to ten, preferably two or three sonotrodes with different geometries, which can be removably attached to the device.

For removing the support structures (3) the generator (6) is turned on and the manipulator (5) is set to create ultrasound waves having a frequency of at least 20 kHz, preferably in a range of from 20 to 40 kHz and/or an amplitude of from 1 to 50 preferably from 10 to 30 µm. The sonotrode (3) is directed towards the predetermined breaking point of a support structure (3) in a distance of 0 to 25 mm, preferably 0 to 10 mm preferably without barrier. The ultrasound waves induce a resonant excitation within the support structure (3) which results in breaking the support structure (3) at the predetermined breaking point.

Additionally, bumps and imperfections can be removed from the surface of the metal based three-dimensional structure by means of ultrasound waves using the device in the same manner as removing the support structures (3) (not shown).

### Benefits of the invention

Removal of support structures from metal based three-dimensional structures prepared by additive manufacturing processes can significantly reduce working time by up to 50%, thereby reducing personnel costs.

Further, upon removal of the support structures with ultrasound waves less force is induced upon the metal based three-dimensional structure compared to mechanical techniques for removing the support structures as discussed in the technical background section so that the usual damages resulting from mechanical removal, such as defects from slipping tools, defects from incorrect storing or clamping of the metal based three-dimensional structure or defects from incorrect handling of the tools, can be avoided.

Additionally, ultrasound waves cannot only be used for removing the support structures but also for surface treatment like removal of bumps or imperfections or reducing of surface roughness. Thus, the method and device of the invention has the potential of being used for a one step post-treatment of an additively manufactured metal based three-dimensional structure by simultaneous removing the support structures and surface treatment.

## Claims

1. A method for post-treating an additively manufactured structure comprising the following steps:
• Preparing a metal based three-dimensional structure including one or more metal based support structure(s) by additive manufacturing;
• Removing the one or more metal based support structure(s) from the metal based three-dimensional structure by means of ultrasound waves.

2. The method according to claim 1, wherein the ultrasound waves have a frequency of at least 20 kHz, preferably from 20 to 40 kHz and/or an amplitude of from 1 to 50 preferably from 10 to 30 µm.

3. The method according to claims 1 or 2, wherein the ultrasound waves are directed towards the one or more metal based support structure(s) by means of a sonotrode, preferably a handheld sonotrode.

4. The method according to claim 3, wherein the sonotrode has a generally circular or generally rectangular geometry having a diameter (circular) or edge length (rectangular) of from 0.5 to 20 mm, preferably from 1 to 15 mm.

5. The method according to any one of the preceding claims, wherein the raw material of the metal based three-dimensional structure and the one or more metal based support structure(s) are individually selected from steel, aluminium alloys, titanium alloys, nickel base alloys, cobalt chromium alloys, other metallic materials such as high density materials having a density of more than 10 g/cm³ and combinations thereof.

6. The method according to any one of the preceding claims, wherein the metal based three-dimensional structure and the one or more metal based support structure(s) are prepared from the same raw material.

7. The method according to any one of the preceding claims, wherein the one or more support structure(s) is a lattice-like structure.

8. The method according to any one of the preceding claims, wherein the one or more support structure(s) are connected to the metal based three-dimensional structure by means of contact areas having a length of from 0.01 to 10 mm, preferably 0.1 to 5 mm.

9. The method according to any one of the preceding claims, wherein the one or more support structure(s) include one or more predetermined breaking point(s) arranged as such that upon removal from the metal based three-dimensional structure fragments having a length of from 1 to 15 mm are obtained.

10. The method according to any one of the preceding claims, wherein the additive manufacturing methods for preparing the metal based three-dimensional structure including one or more metal based support structure(s) are selected from laser powder bed fusion (L-PBF) and electron beam powder bed fusion (E-PBF).

11. The method according to any one of the preceding claims further comprising the step of
• Removing bumps and imperfections from the surface of the metal based three-dimensional structure by means of ultrasound waves.

12. A device for removing one or more metal based support structure(s) from a metal based three-dimensional structure prepared by additive manufacturing comprising
• a generator for generating ultrasound waves;
• a manipulator for manipulating the frequency of the ultrasound waves to at least 20 kHz, preferably in a range of from 20 to 40 kHz and/or the amplitude of the ultrasound waves to from 1 to 50 preferably from 10 to 30 µm; and
• a sonotrode, preferably a handheld sonotrode, having width of from 0.5 to 30 mm, preferably from 0.5 to 20 mm, still more preferably from 1 to 15 mm, most preferably from 1 to 10 mm.

13. The device according to claim 12 being a portable device.

14. The use of the device according to claims 12 or 13 for removing one or more metal based support structure(s) from a metal based three-dimensional structure prepared by additive manufacturing by means of ultrasound waves.

15. The use according to claim 14 for removing bumps and imperfections from the surface of the metal based three-dimensional structure by means of ultrasound waves.
